# EUROPEAN PATENT SPECIFICATION

(11) **EP 2 826 954 B1**
(45) Date of publication and mention of the grant of the patent: **03.06.2015**
(21) Application number: 13188710.1
(22) Date of filing: 15.10.2013
(51) Int. Cl.: F01C 9/00, F01C 21/10, F01C 21/18

(54) **Rotary piston mechanism assembly**
Drehkolbenmaschine
Ensemble de mécanisme de piston rotativ

(30) Priority: 16.07.2013 CN 201310298028
(43) Date of publication of application: 21.01.2015
(73) Proprietor: Rengine Dynatech Co., Ltd., Keelung City (TW)
(72) Inventor: Liao, Kun-Sheng, Keelung City (TW)
(74) Representative: Becker Kurig Straus

(56) References cited:
- EP-A1- 0 843 074
- FR-A1- 2 512 104
- GB-A- 597 743
- JP-A- S58 150 083

## Description

### FIELD OF THE INVENTION

The present invention relates to a piston mechanism assembly, and in particular to a piston assembly that comprises two pistons with undulant-surface that assembling with each other and are movable with respect to each other.

### BACKGROUND OF THE INVENTION

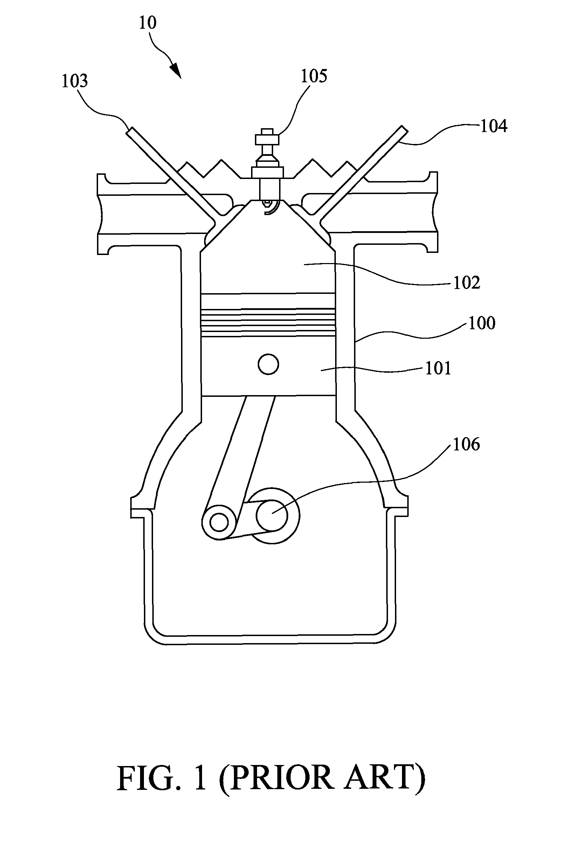

A conventional power conversion device, such as an engine and a compressor, achieve the purpose of energy conversion through a piston mechanism. Figure 1 shows a conventional piston mechanism 10 of a reciprocating engine, which comprises a piston cylinder 100, a piston 101 slidably received in the piston cylinder, a chamber 102 formed inside the piston cylinder 100, an intake valve 103 and an exhaust valve 104 controlling air intake and exhaust, a spark plug 105 controlling ignition, and a crankshaft 106 in operative coupling with the piston 101. While in operation, the gas in chamber 102 generated by combustion push piston 101, thus further drive the rotation of crankshaft 106 thereby achieving the purpose of conversion of energy. Due to the piston mechanism is operated in the manner of four-stroke internal combustion engine, wherein various parameters of the intake stroke, the power stroke, the compression stroke, and the exhaust stroke must be precisely controlled, including the timing of valve opening, the timing of ignition of the plug, and the compression ratio. The structure is thus very complicated. In addition, power can only be generated in one of the four strokes, the power supplied is unsmooth and balance is hard to achieve. Further, the parts show great inertial resistance of reciprocation so as to lead to a great loss of energy. Accordingly, the rotational speed of the transmission shaft is subjected to constraint.

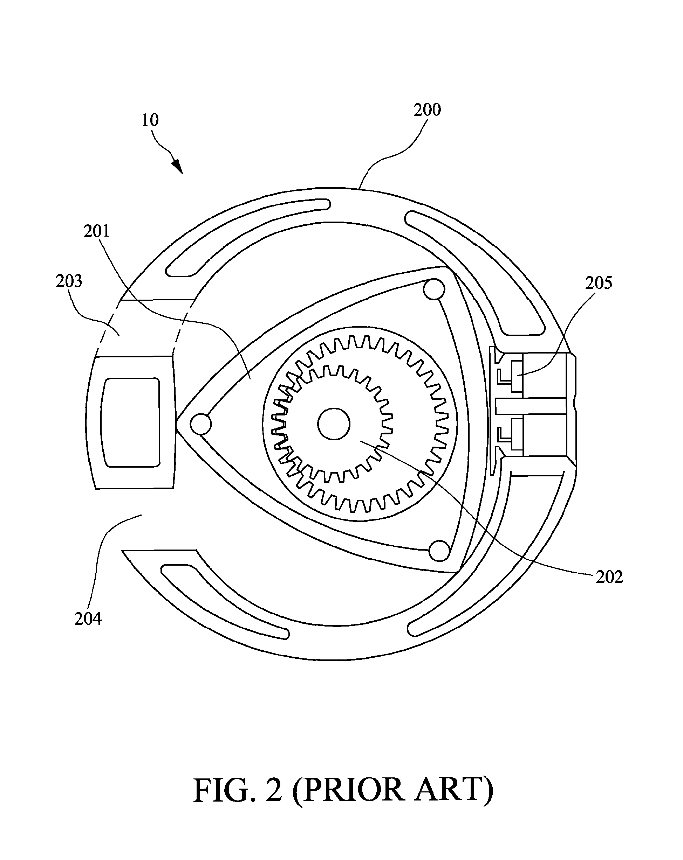

Further, as shown in Figure 2, the conventional piston mechanism 20 of a rotary engine, comprising a piston cylinder 200, rotary pistons 201 rotatably received in the piston cylinder, an eccentric shaft 202 operatively coupled to the rotary pistons 201, and an air intake gate 203, an air exhaust gate 204, and a spark plug 205 arranged in the piston cylinder 200. The rotary pistons 201 divide the piston cylinder 200 into three chambers so that each time the rotary pistons 201 generate three times of power output while making a full turn of rotation. Further, whatever the attitude, there always one of the piston surfaces is in the power state to drive the piston through air intake, compression, power, and exhaust, the power continues without loss of inertial, thus brings more advantages comparing to the reciprocated piston, advantages including smooth operation and high volumetric efficiency can be achieved. However, the rotary pistons 201 are only applicable to the operation of internal combustion engines and are subjected to limitations of compression ratio and short combustion time.

There has been a patent disclosing rotary engine in the prior art described as followed.

United Kingdom patent GB 597 743 A discloses such rotary engine comprising a central vane or impeller unit of sinuous form rotatably mounted in an axially slidable manner between a pair of fixed side plates or casing members whose inner faces are also of sinuous form. Sparking slugs are carried by the side members and extend into combustion pockets on the inside thereof. The piston mechanism assembly of this rotary engine is designed only for working on the internal combustion engine. Therefore, the design of the piston is much more complex.

Thus, it is desired to provide a piston mechanism assembly, which overcomes the drawbacks of the conventional piston mechanism that the supply of power is not uniform, the operation is unstable, balance is hard to keep, the loss of energy is great, the consumption of fuel is great, and the pollution caused is heavy.

### SUMMARY OF THE INVENTION

An object of the present invention is to provide an axially reciprocal piston mechanism assembly.

To achieve the above object, the present invention provides a piston mechanism assembly, which comprises a piston group, which comprises two annulus-shaped undulant-surface pistons, each of which comprises an axial through hole and one end with continuous undulant surface waved in circumferential direction, each continuous undulant surface comprising at least two crest portions and two trough portions to mate another continuous undulant surface, the two undulant-surface pistons being arranged coaxially to assemble each other in relative motion with the continuous undulant surface; a first outer ring, which is provided on an outer circumference of one of the undulant surface pistons to move synchronously therewith and is arranged to cover the surface wherein the two undulant surface pistons are assembled, the first outer ring comprising first outer ring gate that correspond in number and positions to the crest portions and extend through the first outer ring; a second outer ring, which corresponds to the first outer ring and is provided on an outer circumference of another one of the undulant-surface pistons to move synchronously and cover the surface wherein the two undulant-surface pistons are assembled, the second outer ring comprising second outer ring gate that correspond in number and positions to the first outer ring gate and extend through the second outer ring, whereby when the two undulant-surface pistons are set in assembling engagement with each other, the first outer ring and the second outer ring movably overlap each other and are relatively movable with respect to each other and the first outer ring gate and the second outer ring gate correspond to each other in position and are located at the site of assembling between the two continuous undulant surfaces; a first inner ring, which is provided in the axial through hole of one of the undulant-surface pistons to move synchronously, and comprises first inner ring gate that correspond in number and positions to the crest portions and extend through the first inner ring; and a second inner ring, which corresponds to the first inner ring and is provided in the axial through hole of another one of the undulant-surface pistons to move synchronously, and comprises second inner ring gate that correspond in number and positions to the first inner ring gates, whereby when the two undulant-surface pistons are set in assembling engagement with each other, the first inner ring and the second inner ring movably overlap each other and are relatively movable with respect to each other and the first inner ring gate and the second inner ring gate correspond to each other in position and are located at the location of assembling between the two continuous undulant surfaces.

The above-described piston mechanism assembly further comprises a transmission shaft extending through the axial through holes, wherein one of the two undulant-surface pistons comprises a first retention section arranged in the axial through hole of the undulant-surface piston, the transmission shaft comprising a second retention section corresponding to the first retention section and coupled to the first retention section so that the transmission shaft and the undulant-surface pistons that comprises the first retention section are moved in unison with each other.

The above-described piston mechanism assembly further comprises a piston cylinder, which comprises therein a receiving space having two openings at opposite ends and at least one piston cylinder gate extending through a cylindrical wall of the piston cylinder, the receiving space sequentially receiving therein at least one piston group and first outer ring, second outer ring, first inner ring, and second inner ring corresponding in number to the piston group.

The above-described piston mechanism assembly further comprises two piston cylinder end cover, which are respectively provided on and close the two openings of the two ends of the piston cylinder and each comprises a axial through hole and at least a piston cylinder end cover aperture, the transmission shaft being set through the axial through holes of the two end covers.

In the above-described piston mechanism assembly, the two continuous undulant surfaces are arranged to have same altitude in radial direction of the undulant-surface pistons.

### BRIEF DESCRIPTION OF THE DRAWINGS

The present invention will be apparent to those skilled in the art by reading the following description of preferred embodiments thereof with reference to the drawings, in which:
Figure 1 is a schematic view showing a conventional reciprocal piston mechanism;
Figure 2 is a schematic vie showing a conventional rotary piston mechanism;
Figure 3 is an exploded view showing a piston mechanism assembly according to the present invention;
Figure 4 is a side elevational view showing a piston group of the piston mechanism assembly according to a first embodiment of the present invention;
Figure 5 is a side elevational view showing the piston mechanism assembly according to the first embodiment of the present invention;
Figure 6 is a cross-sectional view showing the piston mechanism assembly according to the first embodiment of the present invention;
Figure 7 is a side elevational view showing a piston group of the piston mechanism assembly according to a first embodiment of the present invention;
Figure 8 is a side elevational view showing the piston mechanism assembly according to the first embodiment of the present invention;
Figure 9 is a cross-sectional view showing the piston mechanism assembly according to the first embodiment of the present invention;
Figure 10 is a side elevational view showing a piston group of the piston mechanism assembly according to a first embodiment of the present invention;
Figure 11 is a side elevational view showing the piston mechanism assembly according to the first embodiment of the present invention;
Figure 12 is a cross-sectional view showing the piston mechanism assembly according to the first embodiment of the present invention;
Figure 13 is a side elevational view showing a piston group of the piston mechanism assembly according to a first embodiment of the present invention;
Figure 14 is a side elevational view showing the piston mechanism assembly according to the first embodiment of the present invention;
Figure 15 is a cross-sectional view showing the piston mechanism assembly according to the first embodiment of the present invention;
Figure 16 is an exploded view showing a piston mechanism assembly according to a second embodiment of the present invention;
Figure 17 is a cross-sectional view, in an assembled form, showing the piston mechanism assembly according to the second embodiment of the present invention;
Figure 18 is a schematic view showing positional relationship among undulant-surface pistons of the piston mechanism assembly according to the second embodiment of the present invention; and
Figure 19 is a schematic view showing positional relationship among the undulant-surface pistons of the piston mechanism assembly according to the second embodiment of the present invention.

### DETAILED DESCRIPTION OF THE PREFERRED EMBODIMENTS

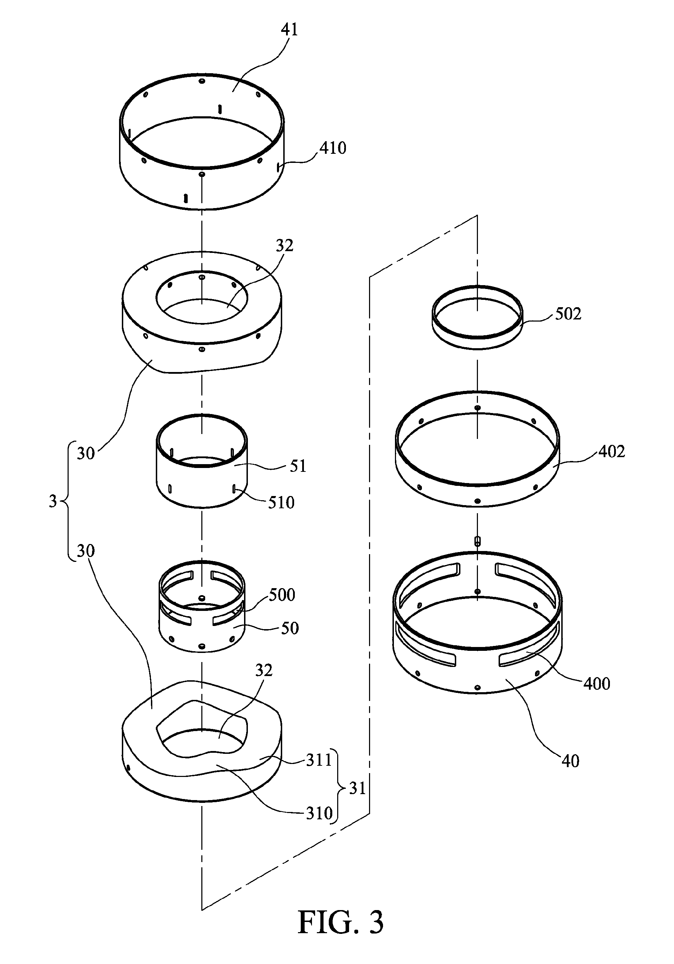

With reference to the drawings and in particular to Figure 3, which shows an exploded view of a first embodiment according to the present invention, as shown in the drawing, the present invention provides a piston mechanism assembly, which comprises a piston group 3 that comprises two annulus-shaped undulant-surface pistons 30. Each of the undulant-surface pistons 30 comprises a axial through hole 32 and has an end that forms a continuous undulant surface 31 that is alternately waved in a circumferential direction, whereby each continuous undulant surface 31 comprises at least two crest portions 310 and two trough portions 311 (and four crest portions and four trough portions are shown in the instant embodiment) to mate another undulant surface 31. The two undulant-surface pistons 30 are arranged coaxially to be assembled each other with the continuous undulant surfaces 31 in a relative motion (wherein besides relative rotation, reciprocal axial movement is also involved due to the spatial relationship between the two continuous undulant surfaces 31). The surfaces of the two undulant surface 31 are arranged to have same altitude in radial direction of the undulant-surface pistons. A first outer ring 40 is provided outside and around an outer circumference of one of the undulant-surface pistons 30 to move synchronously therewith and is arranged to cover the surface wherein the two undulant-surface pistons 30 are assembled, the first outer ring 40 comprising first outer ring gate 400 that correspond in number and positions to the crest portions and extend through the first outer ring 40. In the instant embodiment, the four first outer ring gates 400 are provided as through slots. Each first outer ring gate 400 extends from a location that is away from an apex of one of the crest portions 310 by a predetermined distance along the undulant surface in a direction toward the adjacent trough portion 311 toward a corresponding location of the adjacent one of the crest portions 310. In the instant embodiment, a sleeve 402 is tightly interposed between the first outer ring 40 and the undulant-surface piston 30 to form a gap circumferentially extending therebetween. (Alternatively, a flange can be provided and integrally formed with an outer surface of the undulant-surface piston 30 or an inside circumferential surface of the first outer ring 40 to achieve the same result of formation of a gap.) A second outer ring 41 is arranged around an outer circumference of another undulant-surface piston 30 to move synchronously therewith and cover the surface wherein the two undulant-surface pistons 30 are assembled with the continuous undulant surface 31. The second outer ring 41 comprises second outer ring gates 410 that correspond in number and positions to the first outer ring gates 400 and extend through the second outer ring 41. In the instant embodiment, the four second outer ring gates 410 are provided as through holes. Each second outer ring gate 410 is located at a position adjacent to one of inflection points of the continuous undulant surface 31. When the two undulant-surface pistons 30 are assembled to each other, the first outer ring 40 and the second outer ring 41 movably overlap each other in relative motion with respect to each other with the second outer ring 41 being sliding fit into the gap between the first outer ring 40 and the undulant-surface piston 30. The first outer ring gates 400 and the second outer ring gates 410 are selectively opened and closed with the variation of the relative position therebetween. The first outer ring gates 400 and the second outer ring gates 410 respectively correspond to each other in position and are located at the site of assembling between the two continuous undulant surfaces 31. Further, the positional relationship between the first outer ring gates 400 and the second outer ring gates 410 can be varied to adjust the relative position therebetween according to different requirements for compression ratio and expansion ratio. A first inner ring 50 is received in the axial through hole 32 of one of the undulant-surface pistons 30 to move synchronously therewith (and is arranged in the same undulant-surface piston 30 as the first outer ring 40 in the instant embodiment), and comprises first inner ring gates 500 that correspond, in number and positions, to the crest portions and extend through the first inner ring 50. In the instant embodiment, the four first inner ring gates 500 are provided as through slots. Each first inner ring gate 500 extends from a location that is away from an apex of one of the crest portions 310 of the axial through hole 32 by a predetermined distance along the undulant surface in a direction toward the trough portion 311 toward a corresponding location of the adjacent one of the crest portions 310. Further, in the instant embodiment, a sleeve 502 is tightly interposed between the first inner ring 50 and the undulant-surface piston 30 to form a gap circumferentially extending therebetween. (Alternatively, a flange can be provided and integrally formed with an inner surface of the axial through hole 32 of the undulant-surface piston 30 or a circumferential surface of the first inner ring 50 to achieve the same result of formation of a gap.) A second inner ring 51 is received in the axial through hole 32 of another undulant-surface piston 30 to move synchronously therewith (and is arranged in the same undulant-surface piston 30 as the second outer ring 41 in the instant embodiment), and comprises second inner ring gates 510 that correspond in number and positions to the first inner ring gates 50. In the instant embodiment, four second inner ring gates 510 are provided as through holes. Each second inner ring gate 510 is located in the axial through hole 32 and at a position adjacent to one of the inflection points of the continuous undulant surface 31 to correspond to one of the second outer ring gates 402. When the two undulant-surface pistons 30 are set in assembling engagement with each other, the first inner ring 50 and the second inner ring 51 movably overlap each other and are relatively movable with respect to each other with the second inner ring 51 being sliding fit into the gap between the first inner ring 50 and the undulant-surface piston 30. The first inner ring gates 500 and the second inner ring gates 510 are selectively opened and closed with the variation of the relative position therebetween. The first inner ring gates 500 and the second inner ring gates 510 respectively correspond to each other in position and are located at the portions of the axial through holes 32 where the two continuous undulant surface 31 mate each other. Further, the positional relationship between the first inner ring gates 500 and the second inner ring gates 510 can be varied to adjust the relative position therebetween according to different requirements for compression ratio and expansion ratio.

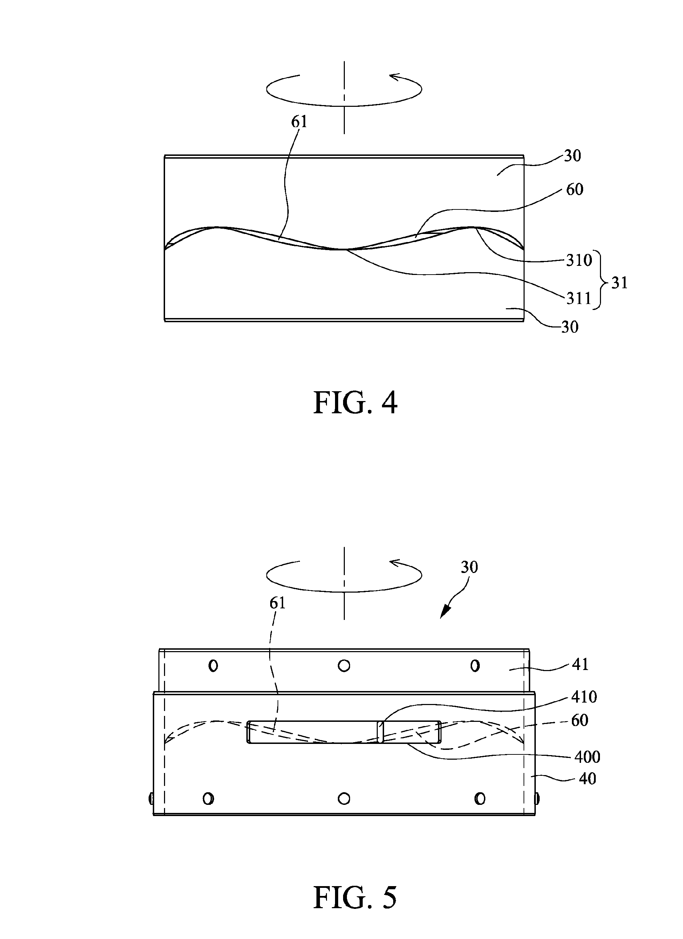

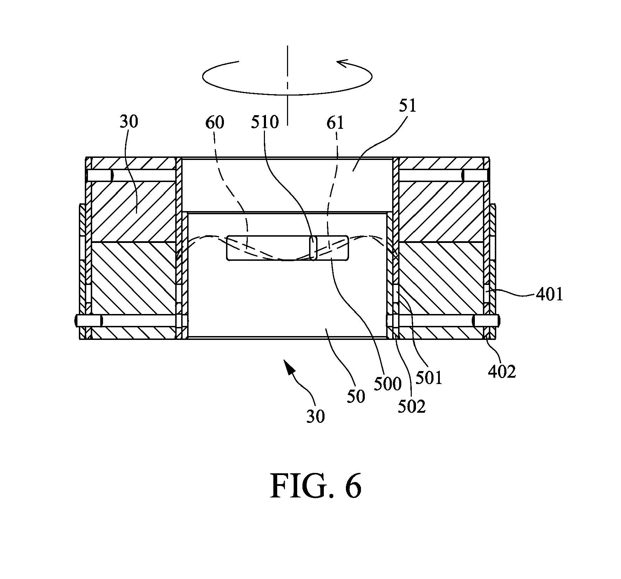

Referring to Figures 4, 5, and 6, as shown in Figure 4, when the undulant-surface pistons 30 assemble each other in such a way that the crest portions 310 of one of them correspond to the trough portions 311 of another undulant-surface piston 30, for the undulant-surface piston 30 of the upper side, it is located at a lowest location. Under this state, the two continuous undulant surfaces 31 form therebetween a plurality of compartments that is of the minimum volume. Further, at the lowest location, each of the crest portions 310 defines, in combination with one of the trough portions 311, two compartments 60, 61. When the two undulant-surface pistons 30 starts to rotate relative to each other from the lowest location, in the instant embodiment, the undulant-surface piston 30 of the lower side is kept fixed, while the undulant-surface piston 30 of the upper side rotates in the counterclockwise direction (as indicated by arrow of the drawing), so that the compartment 60 is set in a compressed state where the volume thereof is decreasing and the compartment 61 is in an expanded state, where the volume is increased. As shown in Figure 5, under this state, the corresponding second outer ring gate 410 is located in the range of the first outer ring gate 400 so as to open the compartment 60, but the compartment 61 is in a closed state. Since the compartment 60 is in a volume-decreased compressed state and the second outer ring gate 410 and the first outer ring gate 400 communicate with each other to open the compartment 60, any fluid contained in the compartment 60 will be compressed and expelled out of the piston group 3. On the other hand, if the rotation is taken in an opposite direction, then the compartment 60 will be in a volume-increased expanded state and the compartment 60 forms a negative pressure state therein to draw an external fluid through the first outer ring gate 410 and the second outer ring gate 400 into the compartment 60. As shown in Figure 6, in the instant embodiment, the second inner ring gate 510 is located in the range of the corresponding first inner ring gate 500 to open the compartment 61. When the undulant-surface piston 30 of the upper side rotates in the counterclockwise direction, the compartment 61 is in a volume-increased expanded state and generates a negative pressure state therein, a fluid contained in the annulus center of the undulant-surface piston 30 is conducted through the second inner ring gate 510 and the first inner ring gate 500 into the compartment 61. On the contrary, when the rotation is made in the opposite direction, the compartment 61 is set in a volume-decreased compressed state and thus, any fluid contained in the compartment 61 will be compressed and expelled into the axial through hole 32 of the undulant-surface piston 30.

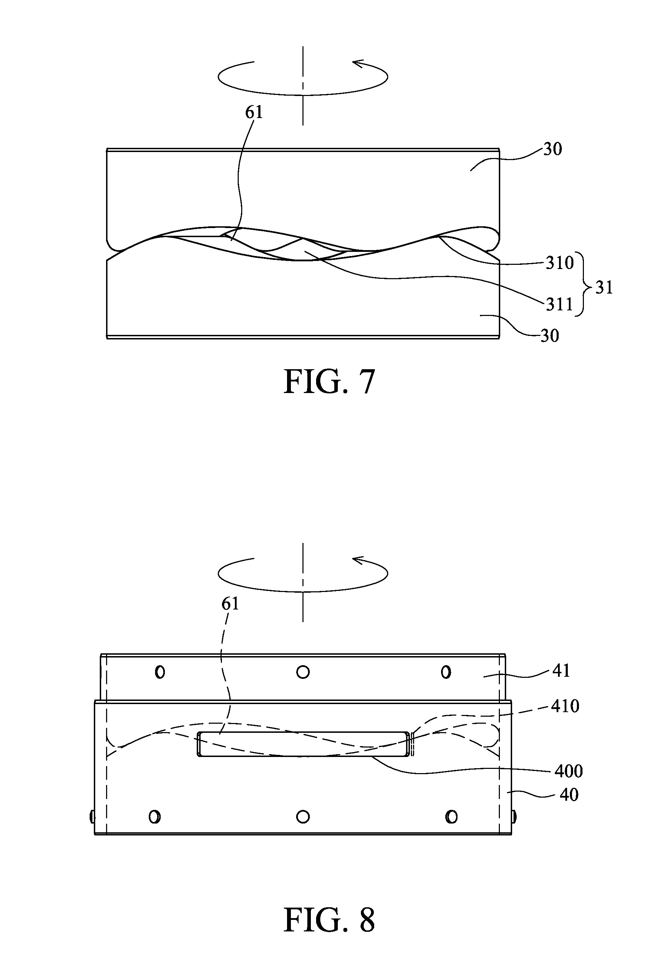

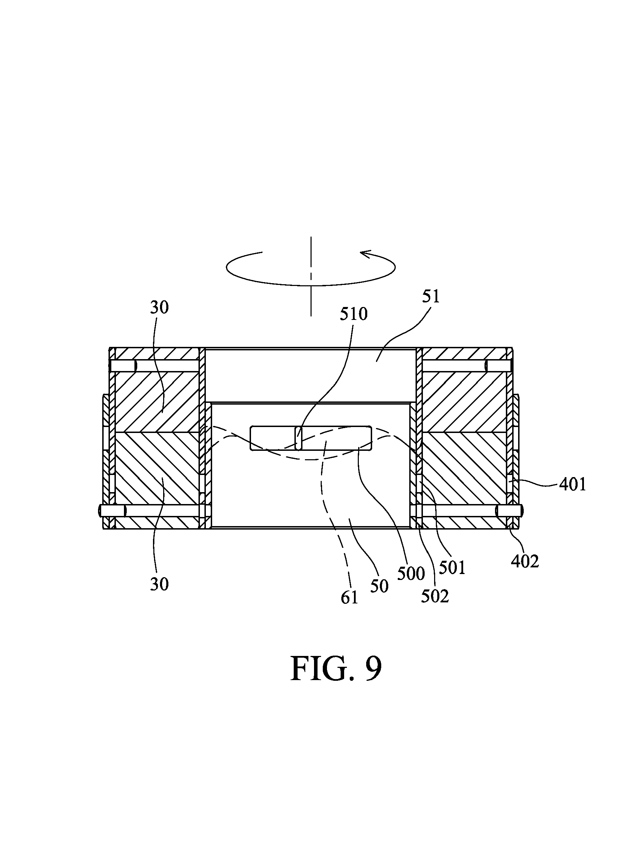

Referring to Figures 7, 8, and 9, as shown in Figure 7, comparison being also made to Figure 4, the undulant-surface piston 30 of the lower side is kept fixed and the undulant-surface piston 30 of the upper side rotates counterclockwise by an angle to have the inflection points of the two continuous undulant surfaces 31 meet each other, due to the two undulant surfaces, the undulant-surface piston 30 of the upper side moves upward with the rotation and under such a state, similar to what shown in Figure 4, the volume of the compartment 61 increases with the rotation of the undulant-surface piston 30 and the volume of the compartment 60 decreases and becomes completely null when the inflection points of the two continuous undulant surface 31 meet each other. Under such a state, the crest portion and the trough portion that correspond to each other collectively form a single compartment 61. As shown in Figure 8, the second outer ring gate 410 is also moved out of the range of the first outer ring gate 400 corresponding to the vanish of compartment 60 at the outer circumference of the piston group 3. As shown in Figure 9, the second inner ring gate 510 is located in the range of the corresponding first inner ring gate 500 to open the compartment 61. When the undulant-surface piston 30 of the upper side continuously rotates in the counterclockwise direction, the compartment 61 is kept in the volume-increased expanded state to generate a negative pressure state therein so that fluid is continuously conducted from the axial through hole 32 into the compartment 61. On the contrary, if the undulant-surface piston 30 of the upper side rotates in the clockwise direction, the compartment 61 is set in the volume-decreased compressed state and the fluid contained in the compartment 61 is compressed and expelled to the axial through hole 32.

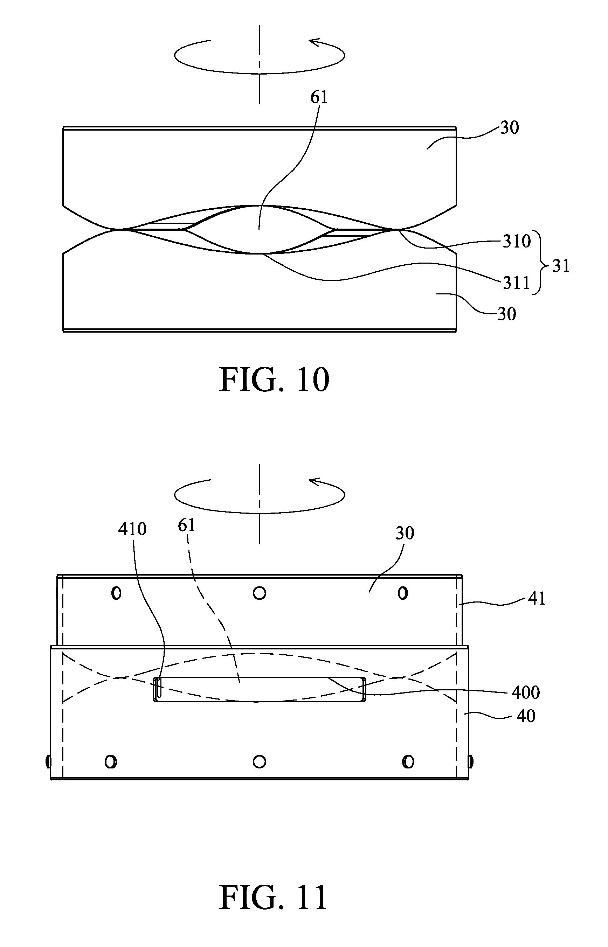

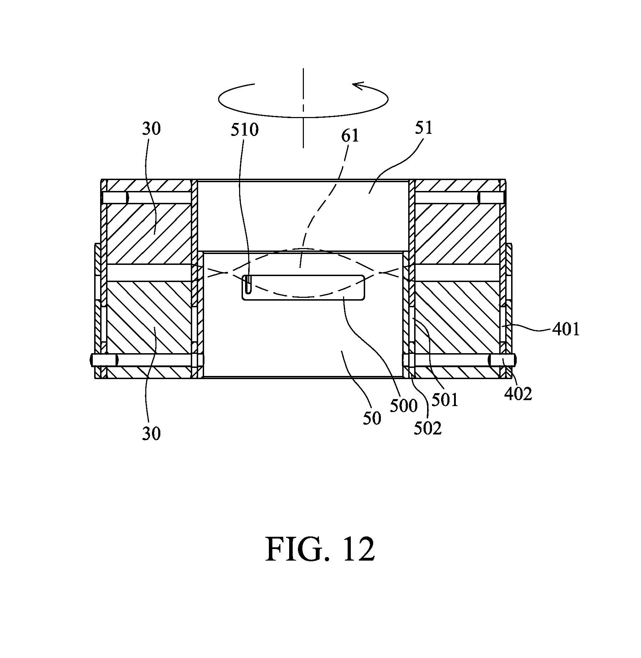

Referring to Figures 10, 11, and 12, which show, respectively, the positions where further counterclockwise rotation is made to what shown in Figures 7, 8, and 9 by an angle to have the apexes of two corresponding crest portions 310 meet each other, as shown in Figure 10, when the two undulant-surface pistons 30 rotate relatively to the position where the apexes of the crest portions 310 meet each other, the two undulant-surface pistons 30 are at locations having the maximum axial distance therebetween. Under this state, the compartment 61 formed between the two continuous undulant surfaces 31 in a state of having the greatest volume. As shown in Figure 11, the second outer ring gate 410 starts to enter the range of the corresponding first outer ring gate 400 and begins to open the compartment 61. When the undulant-surface piston 30 of the upper side continuously rotates in the counterclockwise direction, the compartment 61 enters a volume-decreased compressed state so that the fluid contained in the compartment 61 is compressed and expelled out. Under this state, the axial distance between the two undulant-surface pistons 30 starts to shorten. On the contrary, if the undulant-surface piston 30 of the upper side rotates in the clockwise direction, the second outer ring gate 410 starts to move out of the range of the corresponding first outer ring gate 400 to have the compartment 61 closed at the outer circumference of the undulant-surface piston 30. As shown in Figure 12, the second inner ring gate 510 is located at an end of the corresponding first inner ring gate 500 and starts to move out of the range of the first inner ring gate to have the compartment 61 closed at the inside of the axial through hole 32 of the undulant-surface piston 30. On the contrary, if the undulant-surface piston 30 of the upper side rotates in the clockwise direction, the second inner ring gate 510 starts to enter the range of the corresponding first inner ring gate 500 and open the compartment 61. Under this state, the compartment 61 starts to enter a volume-decreased compressed state and the fluid contained in the compartment 61 is compressed and expelled out.

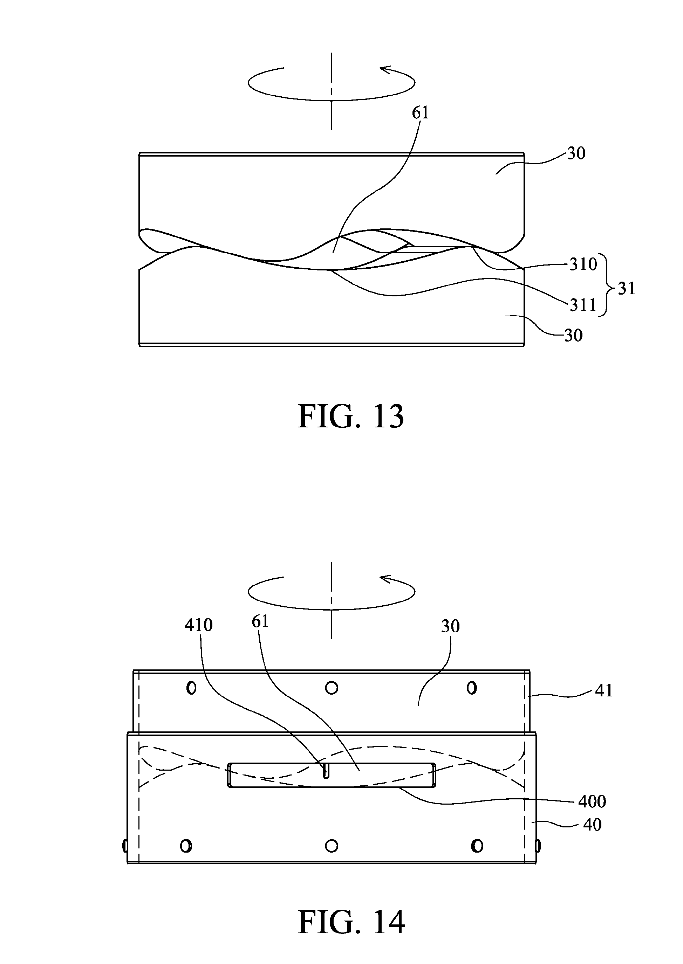

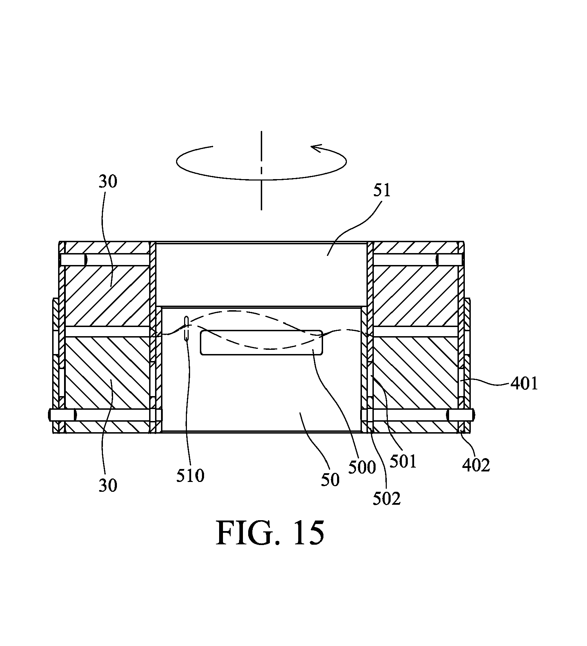

Referring to Figures 13, 14, and 15, which show, respectively, the positions where further counterclockwise rotation is made to what shown in Figures 10, 11, and 12 by an angle to have the inflection points of the two continuous undulant surfaces 31 meet each other, as shown in Figure 13, when the undulant-surface piston 30 of the upper side continuously rotate in the counterclockwise direction, the crest portions of the two continuous undulant surfaces 31 that correspond to each other start to separate from each other. Under this state, the configurations of the two continuous undulant surfaces 31 allow the two undulant-surface pistons to reduce the axial distance therebetween and the compartment 61 formed between the two continuous undulant surfaces 31 starts to compress and reduce the volume thereof so as to expel out the fluid contained in the compartment 61. As shown in Figure 14, the second outer ring gate 410 still remains in the range of the corresponding first outer ring gate 400 and opens the compartment 61. Since the compartment 61 is in a volume-decreased compressed state, the fluid contained in the compartment 61 is continuously expelled through the first outer ring gate 400 and the second outer ring gate 410 to the outer circumference side of the undulant-surface piston 30. When the undulant-surface piston 30 of the upper side continuously rotates in the counterclockwise direction, a new compartment is formed between the inflection points of the crest portion and the trough portion (until the rotation reaches the position shown in Figure 4 and the newly generated compartment becomes the compartment 61). As shown in Figure 15, the second inner ring gate 510 is located at an end of the corresponding first inner ring gate 500 to get into the range thereof. When the new compartment as mentioned above starts to form, the second inner ring gate 510 is also open. On the contrary, if the undulant-surface piston 30 of the upper side rotates in an opposite, clockwise direction, the second inner ring gate 510 leaves the range of the first inner ring gate 500 and is thus closed.

Finally, through further rotation of an angle, the undulant-surface piston 30 of the upper side returns to the lowest location mentioned above as shown in Figures 4, 5, and 6. Under this state, the newly generated compartment becomes the compartment 61 of Figure 4 and the compartment 61 moves to the location of the compartment 60 shown in Figure 4 and becomes the compartment 60. This completes the cycle of variation of volumes of the compartments 60, 61 and the cycle is repeated in the same way as described above. The volume variation of the compartments 60, 61, in combination of opening and closing of the first outer ring gate 400, the second outer ring gate 410, the first inner ring gate 500, and the second inner ring gate 510, causes the fluid to flow in and out of the compartments 60, 61. When a pressurized fluid is introduced to cause the compartments 60, 61 of the piston group 3 to change the volumes thereof so as to drive the two undulant-surface pistons 30 of the piston group 3 to rotate with respect to each other, a device that employs pressurized fluid as a power source to operate is provided. On the other hand, when power is applied to rotate the two undulant-surface pistons 30 of the piston group 3 with respect to each other, the variation of volumes of the compartments 60, 61 can be used to drive the flowing of a fluid so that a device that employs an external supply of power to drive a fluid is provided.

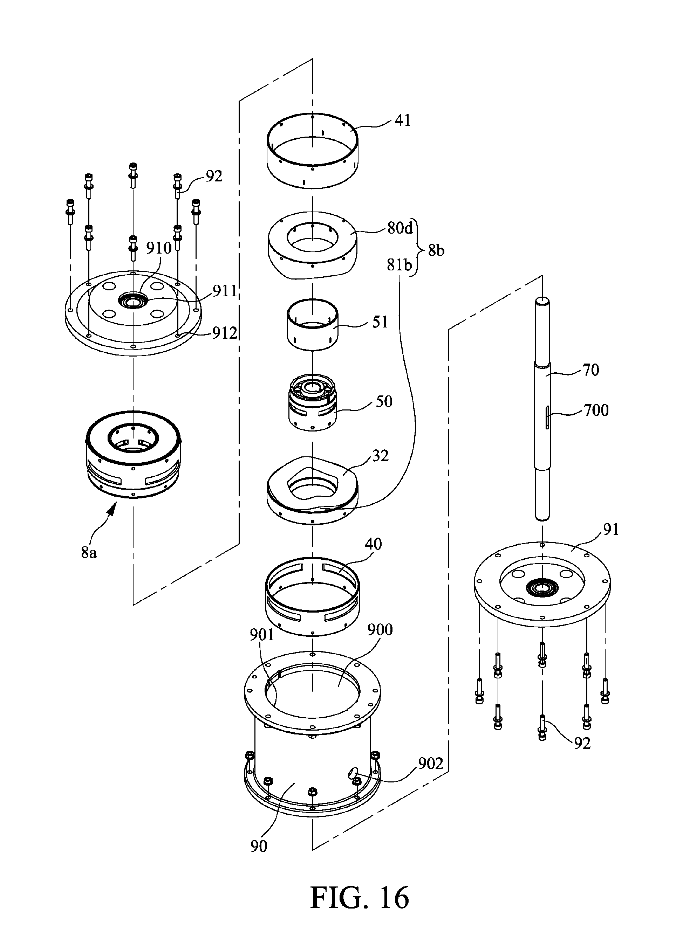

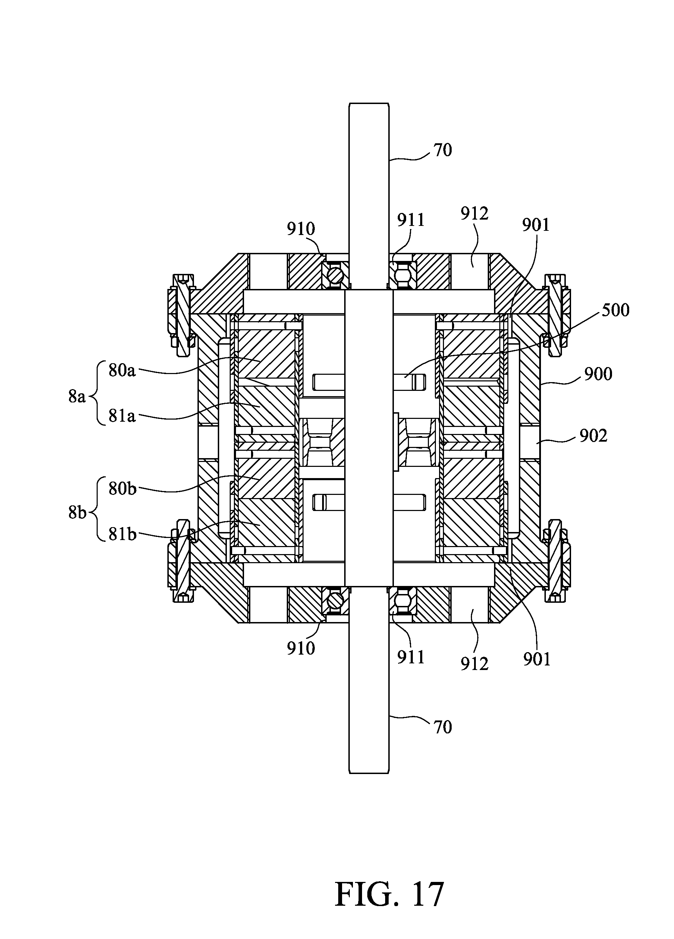

Referring also to Figures 16 and 17, the piston mechanism assembly according to the present invention further comprises a piston cylinder 90, which comprises therein a receiving space 900 having opposite ends each forming an opening 901 and at least one piston cylinder gate 902 extending through a cylindrical wall of the piston cylinder. The receiving space 900 receives therein at least one piston group and first outer ring(s) 40, second outer ring(s) 41, first inner ring(s) 50, and first inner ring(s) 51 corresponding in number to the piston group. In the instant embodiment, the receiving space 900 sequentially receives therein two piston groups 8a, 8b and a corresponding number of first outer ring 40, second outer ring 41, first inner ring 50, and first inner ring 51. The first outer rings 40 and an inside surface of the piston cylinder 90 form therebetween a gap in communication with the piston cylinder gate 902 and the first outer ring gates 400. Alternatively, channels can be provided in the inside surface of the piston cylinder 90 at locations corresponding to the assembling location between each two corresponding undulant-surface pistons 30 to connect the piston cylinder gate 902 and the first outer ring gates 400 and modification can be made according to the arrangement of the piston group 3. Two piston cylinder end covers 91 are respectively provided on and close the two openings 901 of the two ends of the piston cylinder 90 and, in the instant embodiment, are secured by bolt 92. However, the way of securing is not limited to what described herein. Further, the two piston cylinder end covers 91 each comprise a axial through hole 910. A transmission shaft 70 is set through the axial through holes 910 of the two end covers. In the instant embodiment, the axial through hole 910 of the two end covers are provided with bearings 911 for rotatably supporting the transmission shaft 70. Further, the two piston cylinder end covers 91 further comprise at least one piston cylinder end cover aperture 912. When the two piston cylinder end covers 91 and the piston cylinder 90 are secured to each other, the piston cylinder end cover aperture 912 is in communication with the receiving space. The piston mechanism assembly according to the present invention further comprises the transmission shaft 70 extending through the axial through holes of the pistons. One of the undulant-surface pistons of one piston group comprises a first retention section 300 arranged in the axial through hole 32 of the undulant-surface piston and, in the instant embodiment, is arranged in the axial through hole 32 of the undulant-surface pistons 81 a, 80b, 81c, 81d. The first retention section 300 comprises a retention channel 301 communicating with the opposite ends of the axial through hole 32. The transmission shaft 70 comprises a second retention section 700 corresponding to the first retention section 300 and coupled to the first retention section 300 so that the transmission shaft 70 and the undulant-surface pistons 81 a, 80b, 81c, 81d move in unison with each other. As shown in Figure 17, the completely assembling piston cylinder 90 receives, in sequence, therein four piston groups 3 and each piston group 3 is operated in the same way as what descried previously with reference to the first embodiment.

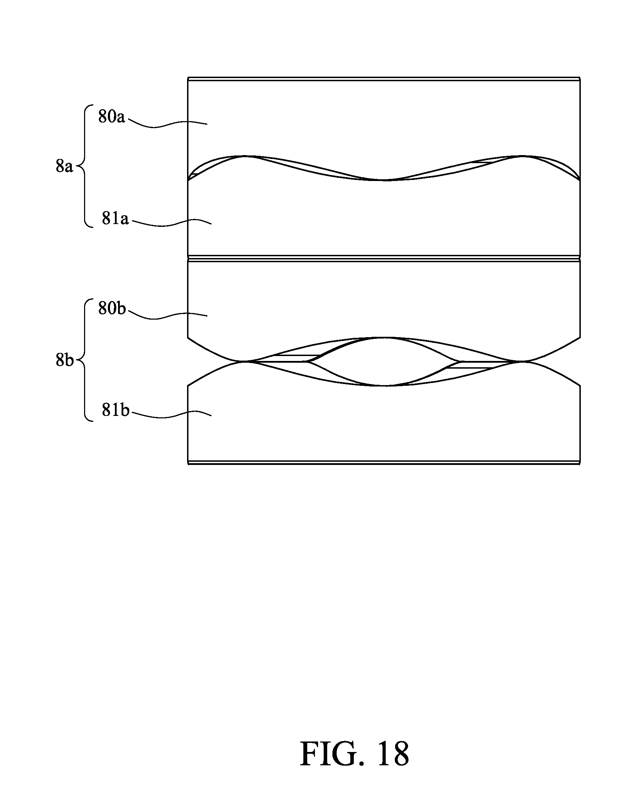

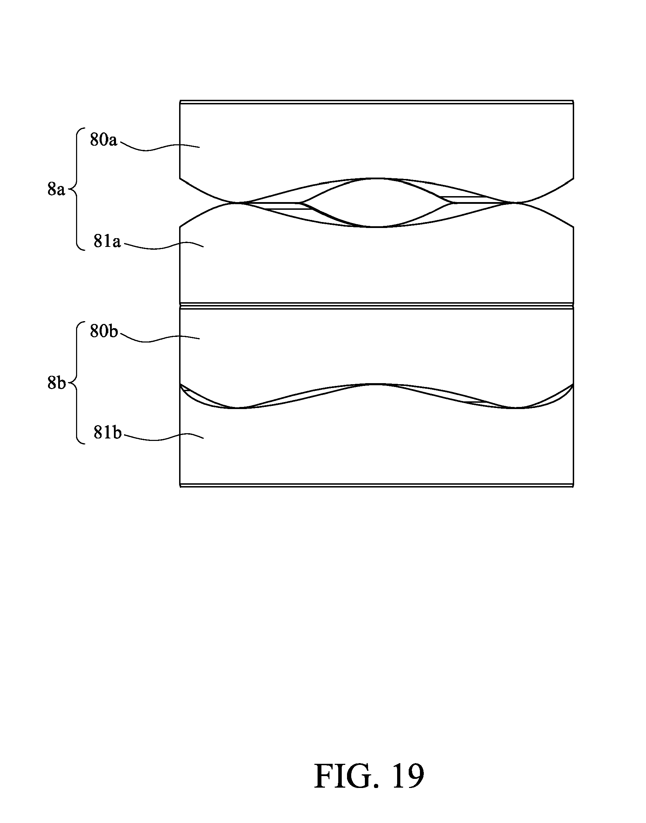

Referring to Figure 18, which shows positional relationship between two piston groups 8a, 8b of the second embodiment, when the undulant-surface pistons 80a, 81 a of the piston group 8a are at a state of minimum axial distance therebetween, the undulant-surface pistons 80b, 81 b of the piston group 8b are in a state of maximum axial distance therebetween. Referring to Figure 19, when the undulant-surface pistons 80a, 81 a of the piston group 8a are in the state of minimum axial distance, the undulant-surface pistons 80b, 81 b of the piston group 8b are in the state of minimum axial distance. In the instant embodiment, the undulant-surface pistons 80a, 81 b are fixed on the cover 91, so that the undulant-surface piston 81 a of the piston group 8a and the undulant-surface piston 80b of the piston group 8b will axially press against each other while rotating. Such a pressing force is applied as a force for position returning of another piston group. Further, it is feasible to arranged more than two piston groups 3 in a cascade manner inside the piston cylinder 80. If four piston groups 3 are provided in cascade, the above-described arrangement allows the axial forces of the piston groups 3 in operation can be properly balanced to enhance overall stability of the operation of the piston mechanism.

While the second embodiment of the present invention is connected externally to a pressurized fluid supply source, the pressurized fluid in introduced through the piston cylinder gate 902 and the pressurized fluid flows through the first outer ring 40 and the second outer ring 41 to get into and expand the compartment 60 or the compartment 61 of the piston group so as to drive the piston group to rotate. While the undulant-surface pistons are rotated to show the maximum axial distance, the compartment 60 or the compartment 61 starts to reduce the volume thereof and compresses the fluid. Under this state, the first outer ring 40 and the second outer ring 41 are closed and the first inner ring 50 and the second inner ring 51 are opened, so that the reduction of volume of the compartment 60 compresses and expels the fluid out of the piston cylinder, under this state. In this way, the piston mechanism assembly of the present invention works as a device that is driven by the pressurized fluid to generate power (such as an engine) and the operation is done in the way similar to an external combustion engine so that no concern of incomplete combustion occurs. Further, by arranging multiple piston groups to balance axial shifting, the operation is made more stable. On the other hand, when the piston group is driven to rotate by supplying of external power, such as a motor coupled to the transmission shaft 70 so that the motor drives the transmission shaft 70 to rotate and simultaneously causes the undulant-surface pistons to rotate, the variation of the volume of the compartment caused thereby generates a force that drives the fluid to flow. Under this state, the piston mechanism assembly of the present invention works like a device that is operated with power to drive a fluid to flow (such as a compressor).

In summary, the present invention provides a piston mechanism assembly that comprises multiple groups of rotary pistons that are movable axially and reciprocally to improve the drawbacks of a conventional piston mechanism that the supply of power is not uniform, the operation is unstable, balance is hard to keep, the resistance induced by inertial of reciprocation is great, and thus the loss of energy is high. Further, the same mechanism can be operated as bilateral power conversion device.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A piston mechanism assembly, comprising:
a piston group (3, 8a, 8b), which comprises two annulus-shaped undulant-surface pistons (30, 80a, 81 a, 80b, 81 b), each of which comprises an axial through hole (32) and one end with continuous undulant surface (31) waved in circumferential direction, each continuous undulant surface (31) comprising at least two crest portions (310) and two trough portions (311) to mate another continuous undulant surface (31), the two undulant-surface pistons (30, 80a, 81 a, 80b, 81 b) being arranged coaxially to assemble each other in relative motion with the continuous undulant surface (31);
a first outer ring (40), which is provided on an outer circumference of one of the undulant--surface pistons (30, 80a, 81a, 80b, 81b) to move synchronously therewith and is arranged to cover the surface wherein the two undulant--surface pistons (30, 80a, 81a, 80b, 81b) are assembled, the first outer ring (40) comprising first outer ring gates (400) that correspond in number and positions to the crest portions (310) and extend through the first outer ring (40);
and **characterized by**:
a second outer ring (41), which corresponds to the first outer ring (40) and is provided on an outer circumference of another one of the undulant-surface pistons (30, 80a, 81a, 80b, 81b) to move synchronously and cover the surface wherein the two undulant-surface pistons (30, 80a, 81a, 80b, 81b) are assembled, the second outer ring (41) comprising second outer ring gates (410) that correspond in number and positions to the first outer ring gates (400) and extend through the second outer ring (41), whereby when the two undulant-surface pistons (30, 80a, 81a, 80b, 81b) are set in assembling engagement with each other, the first outer ring and the second outer ring (41) movably overlap each other and are relatively movable with respect to each other and the first outer ring gates (400) and the second outer ring gates (410) correspond to each other in position and are located at the site of assembling between the two continuous undulant surfaces;
a first inner ring (50), which is provided in the axial through hole (32) of one of the undulant-surface pistons (30, 80a, 81a, 80b, 81b) to move synchronously, and comprises first inner ring gates (500) that correspond in number and positions to the crest portions (310) and extend through the first inner ring (50); and
a second inner ring (51), which corresponds to the first inner ring and is provided in the axial through hole (32) of another one of the undulant-surface pistons (30, 80a, 81a, 80b, 81b) to move synchronously, and comprises second inner ring gates (510) that correspond in number and positions to the first inner ring gates (500), whereby when the two undulant-surface pistons (30, 80a, 81a, 80b, 81b) are set in assembling engagement with each other, the first inner ring and the second inner ring movably overlap each other and are relatively movable with respect to each other and the first inner ring gates (500) and the second inner ring gates (510) correspond to each other in position and are located at the location of assembling between the two continuous undulant surfaces (31).

2. The piston mechanism assembly as claimed in Claim 1, further comprising a transmission shaft (70) extending through the axial through holes (32), wherein one of the two undulant-surface pistons (30, 80a, 81a, 80b, 81 b) comprises a first retention section (300) arranged in the axial through hole (32) of the undulant-surface piston, the transmission shaft (70) comprising a second retention section corresponding to the first retention section (300) and coupled to the first retention section (300) so that the transmission shaft (70) and the undulant-surface pistons (30, 80a, 81 a, 80b, 81 b) that comprises the first retention section (300) are moved in unison with each other.

3. The piston mechanism assembly as claimed in Claim 2, further comprising a piston cylinder (90), which comprises therein a receiving space (900) having two openings (901) at opposite ends and at least one piston cylinder gate (902) extending through a cylindrical wall of the piston cylinder (90), the receiving space (900) sequentially receiving therein at least one piston group (3, 8a, 8b) and first outer ring (40), second outer ring (41), first inner ring (50), and second inner ring (51) corresponding in number to the piston group (3, 8a, 8b).

4. The piston mechanism assembly as claimed in Claim 3, further comprising a two piston cylinder end cover (91), which are respectively provided on and close the two openings (901) of the two ends of the piston cylinder (90) and each comprises an axial through hole (910) and at least a piston cylinder end cover (91) aperture, the transmission shaft (70) being set through the axial through holes (910) of the two piston cylinder end covers (91).

5. The piston mechanism assembly as claimed in Claim 1, **characterized in that** the two continuous undulant surfaces (31) are arranged to have same altitude in radial direction of the undulant-surface pistons (30, 80a, 81a, 80b, 81b).

## Patentansprüche

1. Kolbenmaschinenanordnung umfassend:
Eine Kolbengruppe (3, 8a, 8b), die zwei ringförmige Kolben (30, 80a, 81a, 80b, 81b) mit undulierender Oberfläche umfasst, von denen jede ein axiales Durchgangsloch (32) und ein Ende mit einer kontinuierlich-undulierenden Oberfläche (31) umfasst, die in einer umlaufenden Richtung gewellt ist, wobei jede undulierende Oberfläche (31) wenigstens zwei Scheitelbereiche (310) und zwei Talbereiche (311) umfasst, um zu einer anderen kontinuierlich-undulierenden Oberfläche (31) zu passen, wobei die zwei Kolben mit kontinuierlich-undulierender Oberfläche (30, 80a, 81a, 80b, 81b) koaxial angeordnet sind, um sich gegenseitig in relativer Bewegung mit der kontinuierlich-undulierenden Oberfläche (31) aneinander zu fügen,
einen ersten Außenring (40), der auf einem äußeren Umfang eines der Kolben mit kontinuierlich-undulierender Oberfläche (30, 80a, 81a, 80b, 81b) bereitgestellt ist, um sich damit synchron zu bewegen, und der angeordnet ist, um die Oberfläche abzudecken, an der die zwei Kolben mit kontinuierlich-undulierender Oberfläche (30, 80a, 81a, 80b, 81b) aneinander gefügt sind, wobei der erste Außenring (40) erste Außenringöffnungen (400) umfasst, die in Anzahl und Ausrichtung den Scheitelbereichen (310) entsprechen und sich durch den ersten Außenring (40) erstrecken,
**dadurch gekennzeichnet, dass**
ein zweiter Außenring (41), der dem ersten Außenring (40) entspricht, an einem äußeren Umfang eines anderen Kolben mit kontinuierlich-undulierender Oberfläche (30, 80a, 81a, 80b, 81b) bereitgestellt ist, um sich damit synchron zu bewegen und die Oberfläche abzudecken, an der die zwei Kolben mit kontinuierlich-undulierender Oberfläche (30, 80a, 81 a, 80b, 81 b) aneinander gefügt sind, wobei der zweite Außenring (41) zweite Außenringöffnungen (410) umfasst, die in Anzahl und Ausrichtung den ersten Außenringöffnungen (400) entsprechen und sich durch den zweiten Außenring (41) erstrecken, wobei sich der erste Außenring (40) und der zweite Außenring (41) beweglich überlappen und relativ zueinander beweglich sind und die ersten Außenringöffnungen (400) und die zweiten Außenringöffnungen (410) zueinander ausgerichtet sind und sich an der Stelle des Zusammenschlusses der zwei kontinuierlich-undulierenden Oberflächen (31) befinden, wenn die zwei Kolben mit kontinuierlich-undulierender Oberfläche (30, 80a, 81a, 80b, 81b) in Eingriff zusammengefügt sind,
einen ersten Innenring (50), der in einem axialen Durchgangsloch (32) der Kolben mit kontinuierlich-undulierender Oberfläche (30, 80a, 81a, 80b, 81 b) bereitgestellt ist, um sich synchron zu bewegen, und der erste Innenringöffnungen (500) umfasst, die in Anzahl und Ausrichtung den Scheitelbereichen (310) entsprechen und sich durch den ersten Innenring (50) erstrecken, und
einen zweiten Innenring (51), der dem ersten Innenring (50) entspricht und in dem axialen Durchgangsloch (32) eines anderen Kolbens mit kontinuierlich-undulierender Oberfläche (30, 80a, 81a, 80b, 81 b) bereitgestellt ist, um sich synchron zu bewegen, und der zweite Innenringöffnungen (510) umfasst, die in Anzahl und Ausrichtung den ersten Innenringöffnungen (500) entsprechen, wobei sich der erste Innenring (50) und der zweite Innenring (51) beweglich überlappen und relativ zueinander beweglich sind und die ersten Innenringöffnungen (500) und die zweiten Innenringöffnungen (510) zueinander ausgerichtet sind und sich an der Stelle des Zusammenschlusses der zwei kontinuierlich-undulierenden Oberflächen (31) befinden, wenn die zwei Kolben mit kontinuierlich-undulierender Oberfläche (30, 80a, 81a, 80b, 81b) in Eingriff zusammengefügt sind.

2. Kolbenmaschinenanordnung nach Anspruch 1, ferner umfassend eine Übertragungswelle (70), die sich durch die axialen Durchgangslöcher (32) erstreckt, wobei einer der zwei Kolben mit kontinuierlich-undulierender Oberfläche (30, 80a, 81 a, 80b, 81 b) einen ersten Rückhaltebereich (300) umfasst, der in dem axialen Durchgangsloch (32) der Kolbens mit undulierender Oberfläche angeordnet ist, wobei die Übertragungswelle (70) einen zweiten Rückhaltebereich umfasst, der dem ersten Rückhaltebereich (300) entspricht und mit dem ersten Rückhaltebereich (300) gekoppelt vorliegt, so dass die Übertragungswelle (70) und der Kolben mit kontinuierlich-undulierender Oberfläche (30, 80a, 81 a, 80b, 81 b), der den ersten Rückhaltebereich (300) umfasst, in Einklang miteinander bewegt werden.

3. Kolbenmaschinenanordnung nach Anspruch 2, ferner umfassend einen Kolbenzylinder (90), der in sich einen Aufnahmeraum (900) mit zwei Öffnungen (901) an gegenüberstehenden Enden umfasst, sowie wenigstens eine Kolbenzylinderöffnung (902), die sich durch eine Zylinderwand des Kolbenzylinders (90) erstreckt, wobei der Aufnahmeraum (900) der Reihe nach wenigstens eine Kolbengruppe (3, 8a, 8b), und einen ersten Außenring (40), einen zweiten Außenring (41), einen ersten Innenring (50) und einen zweiten Innenring (51) aufnimmt, die in ihrer Anzahl der Kolbengruppe (3, 8a, 8b) entsprechen.

4. Kolbenmaschinenanordnung nach Anspruch 3, ferner umfassend zwei Kolbenzylinder-Endabdeckungen (91), die entsprechend an und nahe bei den zwei Öffnungen (901) der zwei Enden des Kolbenzylinders (90) bereitgestellt sind und jeweils ein axiales Durchgangsloch (910) und wenigstens eine Öffnung in der Kolbenzylinder-Endabdeckung (91) umfassen, wobei die Übertragungswelle (70) durch die axiales Durchgangslöcher (910) der zwei Kolbenzylinder-Endabdeckungen (91) geführt ist.

5. Kolbenmaschinenanordnung nach Anspruch 1, **dadurch gekennzeichnet, dass** die zwei kontinuierlich-undulierenden Oberflächen (31) so angeordnet sind, dass sie die gleiche Höhe in radialer Richtung der Kolben mit kontinuierlich-undulierender Oberfläche (30, 80a, 81 a, 80b, 81b) aufzuweisen.

## Revendications

1. Ensemble mécanisme de piston, comprenant :
un groupe de pistons (3, 8a, 8b), qui comprend deux pistons à surface ondulante de forme annulaire (30, 80a, 81 a, 80b, 81 b), chacun de ceux-ci comprenant un orifice passant axial (32) et une extrémité avec une surface ondulante continue (31) qui ondule dans la direction circonférentielle, chaque surface ondulante continue (31) comprenant au moins deux parties de crête (310) et deux parties de creux (311) pour s'accoupler à une autre surface ondulante continue (31), les deux pistons à surface ondulante (30, 80a, 81 a, 80b, 81 b) étant disposés de manière coaxiale pour s'assembler l'un l'autre dans un mouvement relatif avec la surface ondulante continue (31) ;
une première bague externe (40), qui est ménagée sur une circonférence externe d'un des pistons à surface ondulante (30, 80a, 81 a, 80b, 81 b) pour se déplacer de façon synchrone avec celui-ci et est disposée pour couvrir la surface où les deux pistons à surface ondulante (30, 80a, 81 a, 80b, 81 b) sont assemblés, la première bague externe (40) comprenant des portes de première bague externe (400) qui correspondent en nombre et en positions aux parties de crête (310) et s'étendent à travers la première bague externe (40) ;
et **caractérisé en ce que** :
une seconde bague externe (41), qui correspond à la première bague externe (40) et est ménagée sur une circonférence externe d'un autre des pistons à surface ondulante (30, 80a, 81 a, 80b, 81 b) pour se déplacer de façon synchrone et couvrir la surface où les deux pistons à surface ondulante (30, 80a, 81a, 80b, 81 b) sont assemblés, la seconde bague externe (41) comprenant des portes de seconde bague externe (410) qui correspondent en nombre et en positions aux portes de première bague externe (400) et s'étendent à travers la seconde bague externe (41), moyennant quoi, lorsque les deux pistons à surface ondulante (30, 80a, 81 a, 80b, 81 b) sont placés dans une mise en prise d'assemblage l'un avec l'autre, la première bague externe (40) et la seconde bague externe (41) se chevauchent de manière mobile l'une l'autre et sont relativement mobiles l'une par rapport à l'autre et les portes de première bague externe (400) et les portes de seconde bague externe (410) correspondent les unes aux autres en position et sont situées au niveau du site d'assemblage entre les deux surfaces ondulantes continues (31) ;
une première bague interne (50), qui est ménagée dans l'orifice passant axial (32) d'un des pistons à surface ondulante (30, 80a, 81 a, 80b, 81 b) pour se déplacer de façon synchrone, et comprend des portes de première bague interne (500) qui correspondent en nombre et en positions aux parties de crête (310) et s'étendent à travers la première bague interne (50) ; et
une seconde bague interne (51), qui correspond à la première bague interne (50) et est ménagée dans l'orifice passant axial (32) d'un autre des pistons à surface ondulante (30, 80a, 81a, 80b, 81b) pour se déplacer de façon synchrone, et comprend des portes de seconde bague interne (510) qui correspondent en nombre et en positions aux portes de première bague interne (500), moyennant quoi lorsque les deux pistons à surface ondulante (30, 80a, 81 a, 80b, 81 b) sont placés dans une mise en prise d'assemblage l'un avec l'autre, la première bague interne (50) et la seconde bague interne (51) se chevauchent de manière mobile l'une l'autre et sont relativement mobiles l'une par rapport à l'autre et les portes de première bague interne (500) et les portes de seconde bague interne (510) correspondent l'une à l'autre en position et sont situées à l'emplacement d'assemblage entre les deux surfaces ondulantes continues (31).

2. Ensemble mécanisme de piston selon la revendication 1, comprenant en outre un arbre de transmission (70) s'étendant à travers les orifices passants axiaux (32), dans lequel un des deux pistons à surface ondulante (30, 80a, 81 a, 80b, 81 b) comprend une première section de rétention (300) disposée dans l'orifice passant axial (32) du piston à surface ondulante, l'arbre de transmission (70) comprenant une seconde section de rétention correspondant à la première section de rétention (300) et couplée à la première section de rétention (300) de sorte que l'arbre de transmission (70) et les pistons à surface ondulante (30, 80a, 81a, 80b, 81 b) qui comprennent la première section de rétention (300) sont déplacés de concert les uns avec les autres.

3. Ensemble mécanisme de piston selon la revendication 2, comprenant en outre un cylindre de piston (90), qui renferme un espace de réception (900) possédant deux ouvertures (901) au niveau d'extrémités opposées et au moins une porte de cylindre de piston (902) s'étendant à travers une paroi cylindrique du cylindre de piston (90), l'espace de réception (900) recevant successivement en son sein au moins un groupe de pistons (3, 8a, 8b) et la première bague externe (40), la seconde bague externe (41), la première bague interne (50) et la seconde bague interne (51) correspondant en nombre au groupe de pistons (3, 8a, 8b).

4. Ensemble mécanisme de piston selon la revendication 3, comprenant en outre deux couvercles d'extrémité de cylindre de piston (91), qui sont respectivement ménagés sur, et ferment les deux ouvertures (901) des deux extrémités du cylindre de piston (90) et chacun comprend un orifice passant axial (910) et au moins une ouverture pour le couvercle d'extrémité de cylindre de piston (91), l'arbre de transmission (70) étant placé à travers les orifices passants axiaux (910) des deux couvercles d'extrémité de cylindre de piston (91).

5. Ensemble mécanisme de piston selon la revendication 1, **caractérisé en ce que** les deux surfaces ondulantes continues (31) sont disposées pour avoir la même altitude dans la direction radiale des pistons à surface ondulante (30, 80a, 81a, 80b, 81b).
